# EUROPÄISCHE PATENTSCHRIFT

(11) **EP 0 435 025 B1**
(45) Veröffentlichungstag und Bekanntmachung des Hinweises auf die Patenterteilung: **08.03.1995**
(21) Anmeldenummer: 90123196.9
(22) Anmeldetag: 04.12.1990
(51) Int. Cl.: B29C 45/17

(54) **Vorrichtung zum Einbringen eines Gases in den Hohlraum einer Spritzform zur Herstellung hohler Kunststoffkörper**
Apparatus for introducing a gas into the cavity of an injection mould for making hollow plastic bodies
Dispositif pour introduire un gaz dans la cavité d'un moule d'injection pour fabriquer des corps creux en matière plastique

(30) Priorität: 23.12.1989 DE 3942957
(43) Veröffentlichungstag der Anmeldung: 03.07.1991
(73) Patentinhaber: FIRMA ANDREAS STIHL, D-71336 Waiblingen (DE)
(72) Erfinder: Ziegler, Hans-Peter, Dipl.-Ing., D-71686 Remseck (DE); Weissert, Wolfgang, Dipl.-Ing., D-71397 Leutenbach (DE)
(74) Vertreter: Wasmuth, Rolf, Dipl.-Ing.

(56) Entgegenhaltungen:
- EP-A- 0 127 961
- EP-A- 0 321 117
- EP-A- 0 421 842
- DE-A- 2 655 255
- DE-A- 3 936 289
- FR-A- 2 125 300
- GB-A- 2 122 130

## Beschreibung

Die Erfindung betrifft eine Vorrichtung zum Einbringen eines dosierten Gasvolumens in einen mit einer geschmolzenen Kunststoffmenge gefüllten Formhohlraum einer Spritzform zur Herstellung hohler Kunststoffkörper, nach dem Oberbegriff des Patentanspruches 1.

Zur Herstellung hohler Kunststoffteile sind im wesentlichen zwei grundsätzliche Verfahren bekannt. Bei dem einen Verfahren (DE-A-25 01 314 entsprechend US-A 4 101 617) wird in einem ersten Schritt der geschmolzene Kunststoff, die sogenannte Kunststoffschmelze, in die Hohlform (Kavität) der Spritzform eingespeist und danach Druckgas über denselben Anguß, also über dieselbe Düse wie die Kunststoffschmelze, in die noch plastische Masse eingebracht, derart, daß diese plastische Masse die Form voll ausfüllt und unter einem unmittelbar nach der Schmelze eingespeisten und aufrechterhaltenen Gasdruck erstarrt, wonach der Gasdruck bis zur Atmosphäre zur Öffnung der Form abgebaut wird und der fertige Hohlkörper entnommen werden kann.

Von diesem Verfahren unterscheidet sich ein anderes bekanntes Verfahren dadurch, daß die Einspeisung der Kunststoffschmelze und des Gases, Stickstoff oder Luft, an getrennten Stellen der Form mittels getrennter Injektionsvorrichtungen erfolgt (US-PS 4 740 150).

Die Zuführung des Druckgases mittels einer Injektionsvorrichtung geschieht dabei also unabhängig von dem Angußsystem für die Kunststoffschmelze. Bei diesem Verfahren kann die Gas-Injektionsvorrichtung unabhängig vom Kunststoff-Angußsystem an einer für die Gaszufuhr besonders geeigneten Stelle der Spritzform angeordnet werden, was insbesondere bei der Herstellung von Hohlkörpern mit großen oder komplizierten Querschnitten vorteilhaft ist. Bei diesem Verfahren der getrennten Einspeisung von Kunststoffschmelze und Gas besteht - insbesondere wenn es sich um eine Kunststoffschmelze aus Polyamid handelt - der Nachteil, daß sich die Kunststoffschmelze nach dem Einbringen in der Form verhältnismäßig schnell abkühlt und dadurch im Bereich der Wandungen der hohlen Spritzform eine Haut bildet, durch welche ein schnelles und verlustfreies Einbringen der vordosierten Gasmenge in die Hohlform kaum mehr möglich ist. Wird aber die vordosierte Gasmenge zur Aufrechterhaltung eines vorgegebenen Gasinnendruckes nicht vollständig, also verlustfrei, in die Form eingebracht, ergeben sich Schwankungen in der Wanddicke des zu fertigenden Hohlkörpers sowie ungleichmäßige, also unschöne, Oberflächen, was zur Unbrauchbarkeit des gefertigten Hohlkörpers und damit zum Ausschuß führen kann. Je nach der Aus- bzw. Formgestaltung der Spritzform für den herzustellenden Kunststoffhohlkörper kann die das Gas einführende Gas-Injektionsdüse eine bereits gebildete Schmelzhaut nicht mehr einwandfrei durchdringen. Beim Einstechen der nadelartigen Gas-Injektionsdüse kann sich die Haut leicht auswölben, wobei sie sich mit einer Randschicht von der Wandung der Form nach innen zu abhebt, so daß das injizierte Gas nur teilweise und mit Verzögerung in das Innere der Hohlform einströmt, während ein anderer Teil der Gasmenge nach außen abströmen kann und so für den Spritzvorgang verloren geht. Diese Erscheinung ist besonders nachteilig bei der Verwendung teilkristalliner Kunststoffe, beispielsweise dem bereits erwähnten Polyamid.

Eine Vorrichtung zum Einbringen eines dosierten Gasvolumens in einen mit Kunststoffschmelze gefüllten Formhohlraum entsprechend dem Oberbegriff des Patentanspruches 1 ist aus der GB-A-2 122 130 bekannt. Diese Vorrichtung funktioniert im sogenannten offenen Verfahren, bei dem die Injektionsdüse in den Formhohlraum hineinragt. Dabei liegt jedoch die Öffnung, durch welche das einzuspeisende Gas in den Formhohlraum eintritt, ungeschützt, so daß bereits in dem Hohlraum befindliche Kunststoffschmelze während des Injizierens des gasförmigen Mediums in diese Öffnung eintreten kann, wodurch der Zustrom des gasförmigen Mediums gestört wird. Die Funktionssicherheit ist dadurch in Frage gestellt, insbesondere dann, wenn die Kunststoffschmelze sehr dünnflüssig ist, so daß ein Eindringen dieser Schmelze in die Öffnung nicht zu vermeiden ist.

Bei einer Verstopfung der Injektionsdüse kann außerdem das eingespeiste Gas nicht wieder verlustfrei zurückgewonnen werden, weil es dann aus dem Formhohlraum nicht vollständig über die Düse wieder absaugbar ist. Die Gasrückgewinnung ist nicht nur aus Umweltschutzgründen, sondern auch aus Kostengründen wichtig, da das gasförmige Medium, beispielsweise Stickstoff, relativ teuer ist.

Aufgabe der Erfindung ist es, die gattungsgemäße Vorrichtung so auszubilden, daß ihre Funktionssicherheit beim Einspeisen und bei der Rückgewinnung des gasförmigen Mediums gewährleistet ist. Die Aufgabe wird gemäß der Erfindung mit den Merkmalen des Patentanspruches 1 gelöst.

Durch die erfindungsgemäße Ausbildung der Vorrichtung wird erreicht, daß der Stößel gegen Eindringen flüssiger Kunststoffschmelze geschützt ist, da er an seinem freien Ende geschlossen ist und der ringförmige Umfangsabschnitt der Hülse den Querkanal in der Schließstellung des Stößels abdeckt. Damit wird auch ein Abheben von Randzonen der bereits eingespeisten Kunststoffschmelze sicher vermieden und eine genaue Dosierung der in das Innere der Schmelze einzubringenden Gasmenge ermöglicht, so daß auch bei der Mengenfertigung hochwertiger Kunststoffhohlkörper einwandfreie Oberflächen und optimal gleiche Wanddicken dieser Kunststoffhohlkörper gewährleistet sind.

Da das vordere Endteil der Gas-Injektionsdüse - wie bei der gattungsgemäßen Vorrichtung - mit seiner in die Hohlform einmündenden Gasaustrittsöffnung während des Einbringens der Kunststoffschmelze bis etwa in die Mitte des der Gas-Injektionsdüse zugeordneten Teiles des Formhohlraumes hineinragt und von der Kunststoffschmelze beaufschlagt ist, kann dieses Ende der Injektionsdüse bei jeder Einspritzphase durch den Kunststoff allseits konvektiv und durch Strahlung der auf etwa 250 bis 280° erhitzten Schmelzmasse derart hoch erwärmt werden, daß die so empfangene Eigenwärme des vorderen Teiles der Düse ausreicht, um die Kunststoffschmelze im Eindringbereich vor Abkühlung und der damit verbundenen Hautbildung zu schützen oder, falls eine Haut schon gebildet ist, ein leichtes und schnelles Durchdringen der Gas-Injektionsdüse durch die hautartig verdichtete Schmelze zu erreichen. Hierdurch können Undichtheiten an der Gas-Einspritzstelle und damit ein Austreten des Gases mit Gasverlust vermieden werden. Die Maßhaltigkeit und das Gefüge der herzustellenden Kunststoffhohlkörper wird insbesondere auch im Bereich der Oberfläche dieser Teile erheblich verbessert. Darüberhinaus kann der Gasinnendruck während der sogenannten Nachdruckzeit, in der sich der Kunststoff in der Form verfestigt, gleichmäßig aufrechterhalten werden, wodurch dadurch bedingte Nachteile gleichfalls behoben werden. Ein Auswölben oder Abheben der verdichteten, hautartigen Randschicht beim Einspritzvorgang der Gas-Injektionsdüse entsteht nicht, weil die hautartige Randschicht der Kunststoffschmelze bei Berührung mit dem vordersten Teil der Düse, der vorteilhaft als Spitze ausgebildet ist, diesen Teil der Düse sofort wieder erwärmt und dadurch den Eindringwiderstand des vorderen Düsenteiles in die Schmelze vermindert. Insgesamt kann das Temperaturgefälle zwischen der Kunststoffschmelze und dem vorderen Düsenteil sehr gering gehalten werden. Es hat sich gezeigt, daß die Temperatur des vorderen Endteiles der Gas-Injektionsdüse nur etwa 10% niedriger ist als die Temperatur der eingespritzten Polyamid-Kunststoffschmelze. Dadurch ist es möglich, ohne Fremderwärmung der Gas-Injektionsdüse etwa verdichtete Randzonen der Schmelze aufzulösen bzw. die Bildung einer Randzone infolge Abkühlung in diesem vorderen Bereich der Einspritzdüse ganz zu vermeiden, so daß ein einwandfreies und schnelles Einstechen der Gas-Injektionsdüse und ein verlustfreies Einbringen der vorgegebenen Gasmenge möglich ist.

Bei einer vorteilhaften Ausgestaltung der erfindungsgemäßen Vorrichtung ist die Hülse als Führung für den Stößel ausgebildet, wobei vorzugsweise diese als selbständiger Bauteil ausgestaltet ist, der im Grundkörper der Gaseinspritzvorrichtung angeordnet ist.

Der Stößel der Gas-Injektionsdüse kann von einer Feder beaufschlagt sein.

In weiterer Ausbildung der Erfindung können zumindest die in den Formhohlraum hineinragenden Abschnitte der Gas-Injektionsdüse aus einem Material mit hoher Wärmekapazität, beispielsweise Stahl, Aluminium oder dgl., bestehen. Ein solches Material nimmt die Wärme der Kunststoffschmelze schnell auf und speichert sie ausreichend lange. Denkbar ist auch, daß der vordere Abschnitt der Düse in geeigneter Weise zur Speicherung der Wärme mit einer Isolierung versehen ist.

Eine vorteilhafte Maßnahme zur Steigerung der Wärmeaufnahme des vorderen Endteiles der Injektionsdüse besteht darin, daß die Masse des im Formhohlraum liegenden freien Endabschnittes des Stößels größer gehalten ist als die des ihn umgebenden, ebenfalls im Hohlraum befindlichen Abschnittes der Hülse. Hierdurch wird der Stößel stärker als die ihn umgebende Hülse erwärmt, was für die Durchdringung der Randschicht der Schmelze von Vorteil ist. Insgesamt ist die Wandstärke im Bereich des im Formhohlraum liegenden freien Endes der Injektionsdüse kleiner als in dem weiter außen liegenden, insbesondere außerhalb des Formhohlraumes liegenden Bereich, wodurch die Wärmeleitung zu dem außerhalb des Hohlraum liegenden Injektionsbereich verkleinert und somit die Wärmekapazität der Düse erhöht ist.

Um mit Sicherheit zu verhindern, daß beim Durchstoßen der Düse des Stößels durch die Randzone der Kunststoffschmelze sich kleinste Bereiche dieser Schmelze von der Düse bzw. von der die Düse umgebenden Hülse ablösen und um zu verhindern, daß während der Injektion Teile des injizierten Gases nach außen entweichen, ist nach einem weiteren Merkmal der Erfindung vorgesehen, das in den Formhohlraum frei hineinragende Ende der Gas-Injektionsdüse so auszubilden, daß dieses zusammen mit der in diesem Hohlraum befindlichen Schmelze eine Abdichtung gegen Austreten des injizierten Gases bildet.

Dies wird dadurch erreicht, daß der in den Formhohlraum ragende Teil der Führung, beispielsweise in Form einer Hülse, möglichst symmetrisch über seinen Querschnitt senkrecht zu ihrer Längsachse mindestens einen Ansatz aufweist, der ihren Außenquerschnitt vergrößert, also etwa in radialer Richtung von ihr absteht. Solche Ansätze können nockenartig oder ringförmig ausgebildet sein und aus einem geeigneten metallischen oder nicht metallischen Werkstoff, beispielsweise auch aus Gummi, bestehen. Bei einer bevorzugten Ausführungsform ist der Ansatz der Führungshülse ringförmig ausgebildet, vorzugsweise in Form eines den Außenmantel der Hülse mit Abstand umgebenden zylindrischen Ringes, derart, daß zwischen der Führungshülse und dem zylindrischen Ring ein Ringspalt gebildet ist, der Kunststoffschmelze aufnehmen kann. Dieser Ringspalt umgibt den Endabschnitt der Führungshülse und liegt gleichfalls zusammen mit diesem innerhalb des der Gas-Injektionsdüse zugeordneten Teiles des Formhohlraumes. Vorzugsweise endet er unterhalb des freien Endes der Führungshülse. Andere geeignete Ausbildungen für diese Ansätze sind denkbar. Beispielsweise kann anstelle eines die Hülse mit Abstand umgebenden zylindrischen Ringes auch ein O-Ring oder dergleichen auf die innere Mantelfläche der Hülse aufgesetzt werden, derart, daß der Querschnitt der Führungshülse an dieser Stelle vergrößert wird. Infolge dieser Ausbildung wird der Bereich, in dem sich die Schmelze haftend anlegen kann, also der zwischen der in den Formhohlraum eingeführten Gas-Injektionsdüse und der sie umgebenden Hülse derart verbreitert, daß sich hier die Schmelze festsetzen kann. Hierbei entsteht infolge mäßiger Erstarrung der Schmelze eine gasdichte Verbindung zwischen Schmelze und Außenumfang des Endteiles der Injektionsdüse und der Hülse. Wird dabei die Hülse zylindrisch ausgebildet und mit einem sie mit Ringspalt umgebenden zylindrischen Ansatz versehen, ergibt sich eine Art Labyrinthdichtung, durch welche Leckagen auch bei unterschiedlichen Viskositäten der Schmelze bzw. komplizierten Querschnittsformen des zu spritzenden Hohlkörpers vollständig vermieden sind, zumal eine schnelle Abkühlung der diese Hülse umgebenden Kunststoffrandschicht die Dichtwirkung dieser Labyrinthdichtung noch verstärkt. Dabei kann so vorgegangen werden, daß der Stößel der Gasinjektionsdüse, der an seinem Ende mit einer Spitze, beispielsweise kegelförmig, ausgebildet ist und den Querkanal für den Gasaustritt aufweist, wenige Sekunden nach einer Einbringung der Schmelze in den Hohlraum der Spritzform zur Injektion des Gases so weit vorgeschoben wird, bis der Querkanal außerhalb der ihn umgebenden Hülse liegt und das zu injizierende Gas schnell und verlustfrei austreten kann.

Der Gegenstand der Erfindung ist nachstehend an zwei Ausführungsbeispielen schematisch dargestellt.
- Fig. 1: zeigt im Teilschnitt die Spritzgußform mit ihren beiden Formhälften sowie gestrichelt eingezeichnetem Eintrittskanal für die Kunststoffschmelze und der von dieser örtlich getrennt angeordneten Vorrichtung zur Einbringung einer vorgegebenen Gasmenge zur Erzeugung eines ausreichenden Gasinnendruckes bei der Formung des Kunststoffhohlkörpers;
- Fig. 2: zeigt eine im Prinzip gleiche Ausbildung, bei der jedoch die Injektionsvorrichtung teilweise Bestandteil der einen Formhälfte der Spritzform selbst ist vor der Einspeisung von Schmelze in den Formhohlraum und
- Fig. 3: die Ausführung nach Fig. 2 nach Einspeisung der Schmelze in den Formhohlraum in der Gaseinlaßphase.

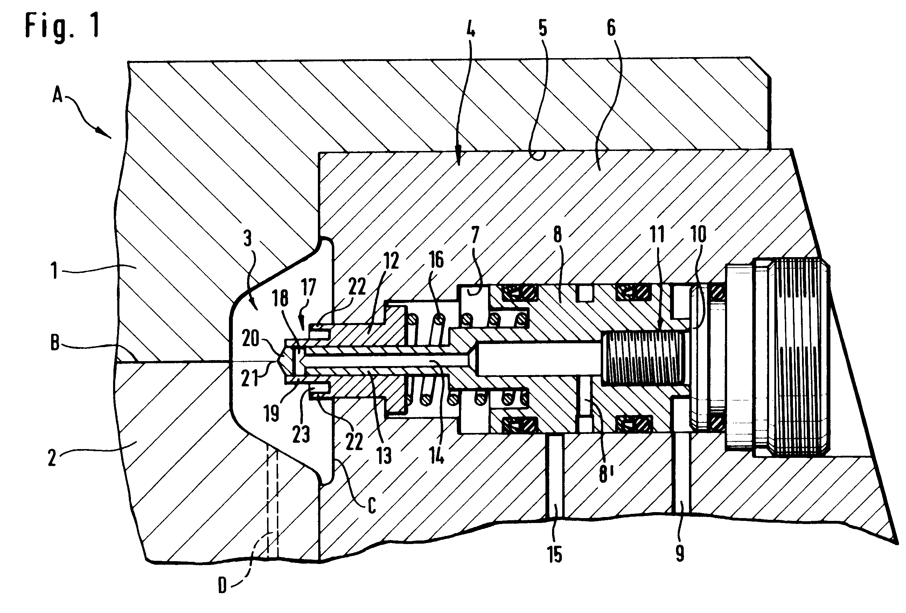

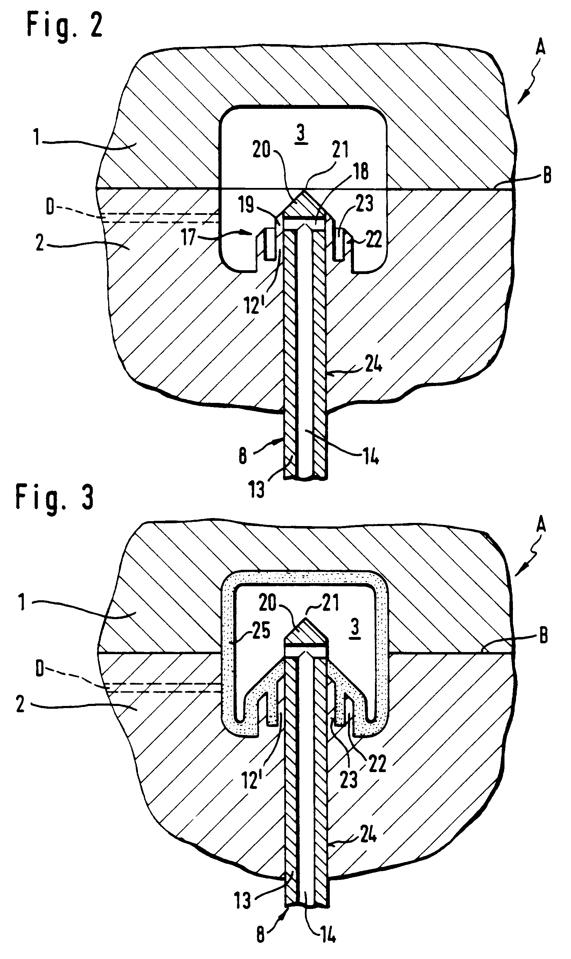

Die aus Fig. 1 ersichtliche Spritzgußform A besteht aus den Formteilen 1 und 2, deren Teilungsebene mit dem Bezugszeichen B angedeutet ist. Die Spritzgußformteile 1, 2 umschließen einen Formhohlraum (Kavität) 3, der in seiner Form derjenigen des herzustellenden hohlen Kunststoffkörpers entspricht. Im Ausführungsbeispiel der Fig. 1 hat der Formhohlraum und damit der fertige Kunsthohlkörper einen etwa trapezförmigen Querschnitt. Beim Ausführungsbeispiel der Fig. 2 und 3 ist er etwa quadratisch. Die Einspritzvorrichtung für das Gas, beispielsweise Stickstoff oder Luft, ist in der Zeichnung als Ganzes mit 4 bezeichnet. Nach Fig. 1 ist die Einspritzvorrichtung 4 ein von der Spritzgußform A getrennter Teil, der in eine entsprechende Ausnehmung 5 der beiden Formhälften 1, 2 derart eingesetzt ist, daß sie mit dem vorderen, in der Zeichnung linken, Wandabschnitt C den äußeren Abschluß der Kavität, also ihre rechte Grundwand, bildet. DEr Einspritzkanal D für die Schmelze befindet sich hinter der Zeichenebene und ist deshalb gestrichelt eingezeichnet.

Die Einspritzvorrichtung 4 für das Gas besteht aus einem Grundkörper 6, der eine Ausnehmung 7 hat, in welche eine Injektionsdüse 8 mit Stößel 13 eingesetzt ist. Grundkörper 6 samt Injektionsdüse 8 sind in den Formhälften 1,2 verschiebbar und werden aus ihren in Fig. 1 gezeichneten Einspritzstellungen nach rechts verschoben, wenn der fertige Kunststoffhohlkörper aus den Formhälften 1, 2 entfernt werden soll.

Die Injektionsdüse 8 kann hydraulisch, pneumatisch oder durch Federkraft in Richtung auf den Formhohlraum innerhalb der Ausnehmung 7 ihrerseits zur Gasinjektion in die gezeichnete Einspritzstellung vor und zurück geschoben werden. Im dargestellten Ausführungsbeispiel der Fig. 1 erfolgt die Längsverschiebung pneumatisch über einen im Grundkörper 6 befindlichen Kanal 9, durch welchen das hintere Stirnende des als Kolben 11 ausgebildeten hinteren Abschnittes der Gasinjektionsdüse mit dem Druckmedium beaufschlagt werden kann. Im vorderen Bereich weist die Injektionsdüse 8 eine gegenüber der Spritzform 1 lageunveränderliche Führung 12 in Form einer Hülse 12 auf, in der der nadelartige Stößel 13 der Injektionsdüse 8 geführt ist. Stößel 13 und der hintere Abschnitt der Düse 8 besitzen einen gasführenden Längskanal 14, durch den das in die Form einzuspeisende Gas nach einem Teilvorschub von Injektionsdüse 8 mit Stößel 13 über die sich dann deckenden Kanäle 8' der Injektionsdüse 8 und des Kanals 15 im Grundkörper 6 der Einspritzvorrichtung in den Längskanal 14 einströmen kann. Die Vorschubsteuerung der Gasinjektionsdüse 8 samt ihrem Stößel 13 erfolgt mittels eines nicht dargestellten Steuerungsgerätes, wobei die Düse 8 samt Stößel 13 in Richtung auf den Formhohlraum 3 entgegen der Kraft der Feder 16 aus der in Fig. 1 dargestellten Schließstellung in die Gaseinlaßstellung und durch dieselbe Feder bei Absenken des Gasdruckes im Zuführkanal 9 in ihre Schließstellung zurückgeschoben wird. Jede andere Vorschubbewegung für die Injektionsdüse bzw. den Stößel 13 sowie andere Ausbildungen der Injektionsdüse 8 sind denkbar.

Die Vorrichtung der Fig. 1 ist also ausschließlich zum Einbringen eines Gases wie Stickstoff, Luft oder dergleichen in den Hohlraum 3 der Spritzform 1, 2 vorgesehen, um bei der Formung hohler Kunststoffkörper aus einer flüssigen Schmelze eines teilkristallinen Kunststoffes, insbesondere Polyamiden, einen Gasinnendruck aufzubauen, um gleichmäßige Wanddicken und eine einwandfreie Oberfläche des herzustellenden Hohlkörpers zu gewährleisten. Beim Herstellungsvorgang werden Kunststoffschmelze und Gas in zwei Phasen in den Formhohlraum 3 eingespeist, derart, daß zunächst nur die Schmelze in die Kavität gespritzt wird und danach in einer zweiten Phase das Druckgas in die noch plastische Masse injiziert wird, derart, daß die Schmelze den Formhohlraum 3 restlos ausfüllt und unter dem aufrechterhaltenen Gasdruck erstarrt.

Erfindungsgemäß ist nun das in den Hohlraum 3 der Spritzform 1, 2 weisende Ende 17 der Gasinjektionsdüse 8, das als Endteil bezeichnet ist, freiliegend etwa im Zentrum eines der Gas-Injektionsdüse 8 zugeordneten Teiles des Formhohlraumes 3 angeordnet. Demgemäß befindet sich nach dem Einbringen der Schmelze in die Kavität 3 der vordere Endteil 17 der Gas-Injektionsdüse 8, bestehend aus dem vorderen Abschnitt der Führungshülse 12 und dem vorderen Teil des in dieser Führungshülse geführten Stößels 13 im wesentlichen zentral innerhalb des Formhohlraumes 3. Im vorderen Ende des Stößels 3 befindet sich der Auslaß, also die Mündung eines im Stößel 17 vorgesehenen Längskanales 14, durch welche das Gas nach Vorschieben des Stößels in die Kavität nach ihrer Füllung mit Schmelze eingespeist wird.

An seinem freien, in dem Hohlraum 3 der Spritzform 1, 2 liegenden Ende 17 ist der Stößel 13 geschlossen ausgebildet und in dem vor diesem geschlossenen Ende liegenden Bereich mit einem Querkanal 18 versehen, der seinerseits mit dem gasführenden Längskanal 14 verbunden ist. Dieser Querkanal 18 ist in der Schließstellung des Stößels l3 (vgl. Fig. 1 und 2) von einem vorzugsweise zylindrischen Abschnitt 19 der Führungshülse 12 verschlossen. Das geschlossene Ende 20 des Stößels 13 ist mit einer Spitze 21 versehen. Der vordere Endabschnitt 17 kann insgesamt spitzkegelförmig ausgebildet sein, wie dies in dem Ausführungsbeispiel der Fig. 2 und 3 dargestellt ist. Die spitze Ausführung dieses Endabschnittes 17 bewirkt, daß eine etwa infolge Abkühlung der Kunststoffschmelze gebildete oder sich bildende hautartig verdichtete Schicht der Schmelze beim Vorgehen des Stößels 13 widerstandslos durchstoßen werden kann.

Infolge der im Innern des Formhohlraumes 3 befindlichen Teile der Injektionsdüse 8 wird ihr Endabschnitt 17, insbesondere durch die hohe Temperatur der eingespritzten Kunststoffschmelze, die sich über diesen Endabschnitt 17 legt und ihn mindestens teilweise umgibt, rasch hoch erwärmt, so daß beim nachfolgenden Vorschub des Stößels 13 aus der Schließstellung in die Öffnungsstellung der Stößel 13 eine im äußeren Bereich etwa schon erstarrte Schmelze infolge der starken Erwärmung des vorderen Endteiles 17 leicht und schnell durchdringen kann, ohne daß ein Abheben des im Innern noch plastischen Kunststoffteiles erfolgt und damit Undichtigkeiten (Leckagen) mit dem Nachteil von Gasaustritten auftreten können.

Um die in den Formhohlraum 3 hineinragenden vorderen Teile 19, 20, 22, die zusammen das vordere Endteil 17 der Gas-Injektionsdüse 8 bilden, schnell und besonders intensiv durch die sie umgebende hochtemperierte Kunststoffschmelze zu erhitzen, empfiehlt es sich, diese Teile aus einem Material hoher Wärmekapazität, beispielsweise aus Stahl, Aluminium oder einem anderen, gut wärmeleitenden Material, herzustellen. Eine weitere Möglichkeit, die Temperatur dieses vorderen Endteiles 17 der Düse 8 durch Erwärmung mittels der Kunststoffschmelze zu erhöhen, besteht darin, die Masse des im Formhohlraum 3 liegenden freien Endabschnittes 17 des Stößels 13 größer als die ihn umgebenden ebenfalls im Hohlraum 3 befindlichen Abschnitte der Führungshülse 12 auszubilden. Um dies zu erreichen, ist das Ende 20 mit Spitze 21 des Stößels 13 vollwandig und aus optimal wärmeaufnehmendem Material ausgebildet, während der umgebende ringförmige Abschnitt 19 der Hülse 12 dünnwandig und/oder aus einem weniger gut leitendem Material bestehen kann.

In weiterer Ausbildung der Erfindung weist der in den Formhohlraum 3 ragende Teil der Führungshülse 12 Ansätze 22 auf, die vorzugsweise ringförmig ausgebildet sind, durch welche der Außenquerschnitt und damit die Masse des Endabschnittes 17 der Führungshülse vergrößert wird. Die Ansätze 22 können durch Nocken oder dgl. gebildet sein. Eine bevorzugte Ausführung besteht darin, daß ein ringförmiger Ansatz 22 der Hülse gebildet ist, der diese mit Abstand nach Art eines Ringzylinders umgibt, derart, daß ein Ringspalt 23 zwischen Außenwand der Hülse 12 und umgebendem Ringzylinder 22 gebildet ist. Der Ringzylinder 22 umgibt den zylindrischen Teil 19 und die Führungshülse 12 koaxial und endet unterhalb des frei in den Hohlraum hineinragenden Endes 17 der Führungshülse 12. Dabei liegen die Mantelfläche der Führungshülse 12 und des sie mit Abstand umgebenden zylinderförmigen Ansatzes 22 axial symmetrisch zur Achse des Stößels 13.

Die Anordnung kann ferner so ausgestaltet sein, daß der lichte Abstand zwischen dem Außenmantel der Hülse 12 und der inneren Umfangsfläche des sie umgebenden zylindrischen Ansatzes 22 zur Aufnahme der Kunststoffschmelze während der Einspritzung des Kunststoffes derart auf die Viskosität der Schmelze abgestellt ist, daß diese zwecks Bildung einer Labyrinthdichtung den Ringraum, also den Ringspalt 23, zwischen dem Außenmantel der Hülse 12 und der inneren Fläche des zylinderförmigen Ansatzes 22 wenigstens annähernd ausfüllt.

Das Ausführungsbeispiel der Fig. 2 und 3 zeigt eine Vorrichtung, bei der der Stößel 13 samt einer Führung 12 Bestandteile der Formhälfte 2 der Spritzform 1 sind. Mit 3 ist gleichfalls der Formhohlraum bezeichnet, in den noch keine Kunststoffschmelze eingespritzt ist. Der Stößel 13 ist hier in einer Ausnehmung 24 der Formhälfte 2 geführt, wobei die übrigen Teile der Injektionsdüse 8 nicht näher dargestellt sind. Innerhalb des Stößels 13 befindet sich der Längskanal 14 für die Gaszufuhr. In der Fig. 2 befindet sich der längsverschiebbare Stößel 13 in seiner Ausgangsstellung, in der die Querbohrung 18 für den Austritt des Gases in die Kavität 3 durch den zylindrischen Abschnitt 19 der Führung 12 verschlossen ist. Die Führung 12 ist hier, ebenso wie bei dem Ausführungsbeispiel der Fig. 2, als zylindrische Führungshülse ausgebildet. Diese Führungshülse 12 ist integraler Bestandteil der Formhälfte 2 und aus dieser herausgearbeitet.

Der vordere Abschnitt des Stößels 13 ist kegelförmig ausgebildet und hat, ebenso wie bei der Ausführung nach Fig. 1, einen Querkanal 18 in Form einer Querbohrung für den Gasaustritt. Anstelle einer durchgehenden Querbohrung 18, wie in den Fig. 1 und 2 dargestellt, kann die Bohrung 18 für den Austritt des einzuspeisenden Gases auch als eine Halbbohrung vom Radius des Stößels ausgeführt sein, so daß das Gas nur an einer Seite des Stößels mit höherem Druck als bei einer durchgehenden Bohrung 18 austreten kann.

In der in Fig. 2 gezeigten Schließstellung befindet sich der Stößel 13 innerhalb des vorderen Abschnittes der Führung 12'. Dieser vordere Abschnitt 12', der eine Art Führungshülse 12 bildet, liegt zusammen mit dem geschlossenen Ende 20 des Stößels 13 frei in dem Formhohlraum 3, in welchen, wie beschrieben, die Injektionsdüse 8 mit ihrer Gasaustrittsbohrung 18 mündet. Die Führung 12' wird, wie Fig. 3 zeigt, mit Abstand in Form eines Ringspaltes 23 von einem zylindrischen Ansatz 22 umschlossen. In dem so gebildeten Ringspalt 23 kann die eingespritzte heiße, flüssige Kunststoffschmelze mindestens teilweise einfließen, so daß Ringzylinder 22 und das vordere Ende 19 der Führung 12' durch eine labyrinthartige Dichtung umschlossen sind, die beim Injizieren des Gases, also bei vorgeschobenem Stößel 13, einen dichten Gasabschluß bildet und ein Entweichen des Gases vermeidet. Fig. 3 zeigt die Vorrichtung nach Einspritzen der Kunststoffschmelze in vorgeschobener Stellung des Stößels 13, also in der Gaseinlaßstellung, bei der das Gas über Kanal 14 einströmt und über den Querkanal 18 in den Formhohlraum 13 austreten kann. Wie in Fig. 3 gezeichnet, wird die Kunststoffschmelze 25 unter dem Druck des eingeführten Gases gleichmäßig an die Wandungen des Formhohlraumes angedrückt, wodurch ein gleichmäßig dicker und in seiner Oberfläche glatter Hohlkörper entsteht. Die eingespritzte Kunststoffmenge umschließt ferner nach Art einer Labyrinthdichtung den zylindrischen vorderen Abschnitt der Führung 12 und kann in den Ringraum 23 zwischen diesen und den ebenfalls zylindrisch ausgebildeten Ansatz 22 eindringen und so eine vollständige Abdichtung gegen austretendes Gas bilden. Wie Fig. 3 zeigt, befindet sich das vordere geschlossene Ende 20 des Stößels 13 in der Gaseinlaßstellung in der Kavität 3 und hat die in der Einspritzphase des Kunststoffes etwa gebildete Kunststoffhaut durchstoßen, ohne daß es dabei zu Gasverlusten und/oder zu einem Abheben der Schmelze im Umgebungsbereich des Durchtrittes der Gas-Injektionsdüse kommt. Ermöglicht wird dies, weil die Schmelze an dem vorzugsweise ringzylinderförmig ausgebildeten Ansatz 22 dicht haftend anliegt und sich dadurch beim Eindringen der Injektionsdüse nicht mehr abheben kann. Die beschriebene Labyrinthdichtung kann auch in anderer Weise ausgeführt sein. Wesentlich ist, daß der Ansatz 22 als ein die Hülse 12 (Fig. 2) bzw. die Führung 12' gemäß Fig. 2 und 3 nach Art eines Ringes, einer Wulst oder dgl. ausgebildet ist, derart, daß der Außenquerschnitt der Führung 12' bzw. der Hülse 12 in radialer Richtung durch abstehende Teile vergrößert ist und dadurch Ansätze gebildet werden, welche ringförmig oder nockenartig gestaltet sind. Wie einleitend erwähnt, können diese Ansätze aus metallische oder nicht metallischem Werkstoff, beispielsweise auch durch einen O-Ring, gebildet sein.

Kunststoffhohlkörper von gleichmäßiger Wanddicke und narbenfreier, schöner Haut lassen sich mit der erfindungsgemäßen Vorrichtung dadurch herstellen, daß zum Einbringen des Gases in den Hohlraum einer Spritzform wie folgt verfahren wird. Zunächst wdird der geschmolzene Kunststoff, die sogenannte Kunststoffschmelze, mittels einer geeigneten, an sich bekannten Einspritzvorrichtung in die Hohlform eingespritzt und unmittelbar anschließend wird eine vorbestimmte Menge Gas, beispielsweise Stickstoff oder Luft, über eine von der Kunststoffeinspritzstelle getrennte Gas-Injektionsdüse derart eingespritzt, daß der Kunststoff mit gleichmäßiger Dicke an die Wandungen der Hohlform gedrückt wird. Während des Einspritzens der geschmolzenen Kunststoffmasse ist der vordere Endteil 17 der Gasinjektionsdüse 8 mit ihrer Gasaustrittsöffnung 18 in den Formhohlraum 3 (Kavität) derart vorgeschoben, daß die in die Form einströmende Kunststoffschmelze den etwa in der Mitte der Hohlform befindlichen Endteil 17 der Gas-Injektionsdüse 8 wenigstens teilweise umgibt und dadurch von der Kunststoffschmelze erwärmt wird. Unmittelbar nach dem Einspeisen der Kunststoffmasse wird dann die vorbestimmte Gasmenge (Stickstoff oder Luft) über die Gas-Injektionsdüse 8 in den Formhohlraum 3 unter vorgegebenem Druck eingespeist.

## Patentansprüche

1. Vorrichtung zum Einbringen eines dosierten Gasvolumens in einen mit einer geschmolzenen Kunststoffmenge (Kunststoffschmelze) gefüllten Formhohlraum (Kavität) (3) einer Spritzform (A) zur Herstellung hohler Kunststoffkörper, die einen Einspritzkanal (D) für die Kunststoffschmelze und eine von diesem örtlich getrennte Gas-Injektionsdüse (8) mit einem verschiebbaren Stößel (13) aufweist, deren vorderer, dem Formhohlraum (3) zugewandter Endteil (17) mit dem Formhohlraum (3) gasführend verbunden ist, wobei während des Einbringens der Kunststoffschmelze (25) und der Injektion des Gases in den Formhohlraum (3) der vordere Teil (17) der Gas-Injektionsdüse (8) mit seiner Gasaustrittsöffnung (18) bis etwa in die Mitte des der Gas-Injektionsdüse (8) zugeordneten Teiles des Formhohlraumes (3) frei hineinragend angeordnet ist, wobei der Stößel (13) einen gasführenden Längskanal (14) hat, und in einem vor seinem freien, in den Formhohlraum (3) der Spritzform (1, 2) hineinragenden Ende (20) liegenden Bereich mit einem Querkanal (18) als Gasaustrittsöffnung versehen ist, der mit dem gasführenden Längskanal (14) verbunden ist,
dadurch gekennzeichnet, daß der Stößel (13) an seinem freien, in den Formhohlraum (3) der Spritzform (1, 2) hineinragenden Ende (20) geschlossen ausgebildet ist, und der Querkanal (18) in der Schließstellung des Stößels (13) von einem Umfangsabschnitt (19) einer Hülse (12) umschlossen ist.

2. Vorrichtung nach Anspruch 1,
dadurch gekennzeichnet, daß die Hülse (12) eine Führung für den Stößel (13) ist, die als selbständiger Bauteil ausgebildet ist, und daß dieser im Grundkörper (6) der Gaseinspritzvorrichtung angeordnet ist (Fig. 1).

3. Vorrichtung nach Anspruch 1,
dadurch gekennzeichnet, daß die Führung für den Stößel (13) als integraler Bestandteil einer Formhälfte (2) der Spritzgußform (1, 2) ausgebildet ist (Fig. 2 und 3).

4. Vorrichtung nach einem der Ansprüche 1 bis 3,
dadurch gekennzeichnet, daß das geschlossene Ende (20) des Stößels (13) eine Spitze (21) aufweist und vorzugsweise spitzkegelig ausgeführt ist.

5. Vorrichtung nach einem der Ansprüche 1 bis 4,
dadurch gekennzeichnet, daß zumindest die in den Formhohlraum (3) hineinragenden Abschnitte der Injektionsdüse (8) aus einem Material mit hoher Wärmeaufnahmefähigkeit, beispielsweise Stahl, Aluminium oder dgl., bestehen.

6. Vorrichtung nach einem der Ansprüche 1 bis 5,
dadurch gekennzeichnet, daß die Masse des im Formhohlraum (3) liegenden freien Endes (20) des Stößels (13) größer gehalten ist als die des ihn umgebenden, gleichfalls im Hohlraum (3) befindlichen Abschnittes (19) der Hülse (12).

7. Vorrichtung nach einem der Ansprüche 1 bis 6,
dadurch gekennzeichnet, daß der in den Formhohlraum (3) ragende Teil der Führung (12) einen seitlich ausladenden Ansatz (22) aufweist.

8. Vorrichtung nach Anspruch 7,
dadurch gekennzeichnet, daß der Ansatz (22) ringförmig ausgebildet ist, derart, daß dieser die Führungshülse (12) nach Art eines zylindrischen Ringes mit Abstand umgibt und mit ihr einen Ringspalt (23) zur Aufnahme von Kunststoffschmelze bildet.

9. Vorrichtung nach einem der Ansprüche 7 oder 8,
dadurch gekennzeichnet, daß der zylindrische Ring (22) den Endabschnitt (19) der Führungshülse (12) axialsymmetrisch umgibt und unterhalb der Stirnkante des freien Endes (17) der Injektionsdüse (8) endet.

10. Vorrichtung nach einem der Ansprüche 7 bis 9,
dadurch gekennzeichnet, daß die Größe des lichten Abstandes zwischen Führungshülse (12) und dem ringförmigen Ansatz (22) entsprechend dem Viskositätsgrad der Schmelze bemessen ist.

## Claims

1. Apparatus for introducing a metered volume of gas into a mould cavity (3) filled with a quantity of molten plastics material of an injection mould (A) for making hollow plastic bodies, which comprises an injection channel (D) for the molten plastic material and a gas injection nozzle (8) separated locally therefrom with a displaceable plunger (13), whereof the front end part (17) facing the mould cavity (3) is connected to the mould cavity (3) in a gas-carrying manner, during the introduction of the molten plastic material (25) and the injection of the gas into the mould cavity (3), the front part (17) of the gas injection nozzle (8) being located with its gas outlet opening (18) projecting freely approximately into the centre of the part of the mould cavity (3) associated with the gas injection nozzle (8), the plunger (13) having a gas-conveying longitudinal channel (14) and in a region lying in front of its free end (20) projecting into the mould cavity (3) of the injection mould (1, 2), is provided with a transverse channel (18) as the gas outlet opening, which is connected to the gas-carrying longitudinal channel (14), characterized in that the plunger (13) is constructed to be closed at its free end (20) projecting into the mould cavity (3) of the injection mould (1, 2) and in the closing position of the plunger (13), the transverse channel (18) is surrounded by a peripheral section (19) of a sleeve (12).

2. Apparatus according to Claim 1, characterized in that the sleeve (12) is a guide for the plunger (13), which is constructed as an independent component and that the latter is located in the basic member (6) of the gas injection device (Figure 1).

3. Apparatus according to Claim 1, characterized in that the guide for the plunger (13) is constructed as an integral component of one mould half (2) of the injection mould (1, 2) (Figures 2 and 3).

4. Apparatus according to one of Claims 1 to 3, characterized in that the closed end (20) of the plunger (13) has a tip (21) and is preferably constructed conically.

5. Apparatus according to one of Claims 1 to 4, characterized in that at least the sections of the injection nozzle (8) projecting into the mould cavity (3) consist of a material with a high heat absorption capacity, for example steel, aluminium or the like.

6. Apparatus according to one of Claims 1 to 5, characterized in that the mass of the free end (20) of the plunger (13) lying in the mould cavity (3) is kept greater than that of the section (19) of the sleeve (12) surrounding it and likewise located in the cavity (3).

7. Apparatus according to one of Claims 1 to 6, characterized in that the part of the guide (12) projecting into the mould cavity (3) has a laterally projecting shoulder (22).

8. Apparatus according to Claim 7, characterized in that the shoulder (22) has an annular construction so that the latter surrounds the guide sleeve (12) at a distance in the manner of a cylindrical ring and with the latter forms an annular gap (23) for receiving the molten plastic material.

9. Apparatus according to one of Claims 7 or 8, characterized in that the cylindrical ring (22) surrounds the end section (19) of the guide sleeve (12) in an axially symmetrical manner and ends below the front edge of the free end (17) of the injection nozzle (8).

10. Apparatus according to one of Claims 7 to 9, characterized in that the size of the inside width between the guide sleeve (12) and the annular shoulder (22) corresponds to the degree of viscosity of the molten material.

## Revendications

1. Dispositif pour introduire un volume de gaz dosé dans la cavité (3) d'un moule à injection (A) remplie d'une quantité de matière plastique fondue (matière plastique en fusion) pour fabriquer des corps creux en matière plastique, qui comprend un canal d'injection (D) pour la matière plastique en fusion et une buse d'injection de gaz (8) séparée dans l'espace de ce dernier et munie d'un poussoir (13), dont la section terminale antérieure (17) tournée vers la cavité (3) du moule communique avec ladite cavité (3) du moule en conduisant du gaz, la section antérieure (17) de la buse d'injection de gaz (8) étant disposée pendant l'injection de la matière plastique en fusion (25) et l'injection du gaz dans la cavité (3) du moule de manière que son orifice de sortie de gaz (18) dépasse librement et sensiblement jusqu'au centre de la partie de la cavité (3) du moule associée à la buse d'injection de gaz (8), le poussoir (13) comportant un canal longitudinal (14) conduisant du gaz et, dans une région située devant son extrémité libre (20) dépassant dans la cavité (3) du moule à injection (1, 2), un canal transversal (18) comme orifice de sortie de gaz qui communique avec le canal longitudinal (14) conduisant du gaz, **caractérisé en ce** que l'extrémité libre (20) du poussoir (13) dépassant dans la cavité (3) du moule à injection (1, 2) est fermée, et que le canal transversal (18) est entouré, dans la position de fermeture du poussoir (13), par une section périphérique (19) d'une douille (12).

2. Dispositif selon la revendication 1, caractérisé en ce que la douille (12) constitue un guidage pour le poussoir (13) et est conformée en élément autonome, et que ce dernier est monté dans le corps de base (6) du dispositif d'injection de gaz (fig. 1).

3. Dispositif selon la revendication 1, caractérisé en ce que le guidage pour le poussoir (13) est conformé en élément intégré dans l'une des moitiés (2) du moule à injection (1, 2) (fig. 2 et 3).

4. Dispositif selon l'une des revendications 1 à 3, caractérisé en ce que l'extrémité (20) fermée du poussoir (13) comporte une pointe (21) et est conformée de préférence en cône pointu.

5. Dispositif selon l'une des revendications 1 à 4, caractérisé en ce qu'au moins les sections de la buse d'injection (8) qui dépassent dans la cavité (3) du moule sont constituées d'un matériau présentant une grande capacité d'absorption de chaleur, par exemple acier, aluminium ou analogues.

6. Dispositif selon l'une des revendications 1 à 5, caractérisé en ce que la masse de l'extrémité libre (20) du poussoir (13) située dans la cavité (3) du moule est plus grande que celle de la section (19) de la douille (12) qui l'entoure et se trouve également à l'intérieur de la cavité (3) du moule.

7. Dispositif selon l'une des revendications 1 à 6, caractérisé en ce que la partie du guidage (12) dépassant dans la cavité (3) du moule comporte un embout (22) en porte à faux latéral.

8. Dispositif selon la revendication 7, caractérisé en ce que l'embout (22) présente une forme annulaire de telle façon qu'il entoure la douille de guidage (12) à distance, à la manière d'une bague cylindrique, et qu'il forme avec ladite douille une fente annulaire (23) pour la réception de la matière plastique fondue.

9. Dispositif selon l'une des revendications 7 ou 8, caractérisé en ce que la bague cylindrique (22) entoure axialement et de manière symétrique la section terminale (19) de la douille de guidage (12) et qu'elle se termine en dessous du bord frontal de l'extrémité libre (17) de la buse d'injection (8).

10. Dispositif selon l'une des revendications 7 à 9, caractérisé en ce que la grandeur de l'écartement entre la douille de guidage (12) et l'embout (22) de forme annulaire est adaptée à la viscosité de la masse fondue.
